# EUROPÄISCHE PATENTSCHRIFT

(11) **EP 1 929 146 B1**
(45) Veröffentlichungstag und Bekanntmachung des Hinweises auf die Patenterteilung: **10.11.2010**
(21) Anmeldenummer: 06776730.1
(22) Anmeldetag: 09.08.2006
(51) Int. Cl.: F02F 3/22, F16J 9/22, B23P 15/10

(54) **VERFAHREN ZUR HERSTELLUNG EINES KOLBENS FÜR EINEN VERBRENNUNGSMOTOR SOWIE DANACH HERGESTELLTER KOLBEN**
METHOD FOR PRODUCING A PISTON FOR AN INTERNAL COMBUSTION ENGINE AND THE THUS PRODUCED PISTON
PROCEDE POUR FABRIQUER UN PISTON DE MOTEUR THERMIQUE ET PISTON AINSI REALISE

(30) Priorität: 30.09.2005 DE 102005047035
(43) Veröffentlichungstag der Anmeldung: 11.06.2008
(73) Patentinhaber: Federal-Mogul Nürnberg GmbH, 90441 Nürnberg (DE)
(72) Erfinder: REICHSTEIN, Simon, 90411 Nürnberg (DE); HOFMANN, Lothar, 92318 Neumarkt (DE); KONRAD, Peter, 91257 Pegnitz (DE)
(74) Vertreter: HOFFMANN EITLE
(86) Internationale Anmeldenummer: PCT/EP2006/007909
(87) Internationale Veröffentlichungsnummer: WO 2007/039011

(56) Entgegenhaltungen:
- DD-A1- 279 290
- DE-A1- 19 649 363
- JP-A- 3 138 438
- JP-A- 2000 213 413

## Beschreibung

### Gebiet der Erfindung

Die vorliegende Erfindung betrifft ein Verfahren zur Herstellung eines Kolbens für einen Verbrennungsmotor mit zumindest einem Kühlkanal und zumindest einer armierten Kolbenringnut sowie einen danach hergestellten Kolben.

### Stand der Technik

PKW-Kolben, insbesondere PKW-Dieselkolben, sind im Betrieb hohen Temperaturen und Drücken ausgesetzt. Deshalb ist eine effiziente Kühlung des Kolbens sowie eine Verstärkung an mechanisch hoch beanspruchten Stellen notwendig. Zu diesem Zweck sind PKW-Dieselkolben im Allgemeinen mit Kühlkanälen ausgestattet, durch welche Kühlöl und/oder eine andere Kühlflüssigkeit geleitet wird, um Wärme aus dem Kolben abzuführen.

Zur Herstellung eines Kolbens mit einem Kühlkanal ist es beispielsweise aus der DE 196 49 363 C2 bekannt, einen Schmelzkern aus Salz in einen Hohlraum einer Gussform für einen Kolben einzulegen. Der Schmelzkern wird nach dem Gießen und Erstarren wieder ausgewaschen.

Es ist weiter bekannt, aufgrund der hohen Flächenpressung und Verschleißbeanspruchung in der ersten Ringnut, den Kolben mit einem verstärkten oder armierten Ringträger auszubilden. Dabei ist es beispielsweise bekannt, den Ringträger durch ein sogenanntes Alfinverfahren in den Kolben zu integrieren. Dabei wird der Kolben aus einer Aluminiumlegierung gießtechnisch mit Stahl oder Gusseisen verbunden. Die Ringträger müssen hierfür zunächst in eine Aluminiumsiliziumschmelze (AL-Si-Schmelze) getaucht werden. Die mit der flüssigen Schmelze benetzten Ringträger werden in das Gießwerkzeug eingelegt und umgossen.

Aus der DE 196 49 363 C2 ist es zur Bildung einer armierten Ringnut bekannt, den Schmelzkern aus Salz mit einem äußeren Ring auszubilden, welcher an der Stelle des späteren Ringträgers im Kolben liegt. Der äußere Ring wird nach einem Gießen des Kolbens entfernt und der dadurch geschaffene Raum mit einem Verstärkungsmaterial ausgefüllt.

Ein erheblicher Teil der Herstellungskosten eines Dieselkolbens ist auf die Herstellung und/oder das manuelle Einlegen eines Einlegteils, wie beispielsweise des Schmelzkerns zurückzuführen. Zudem können Lageschwankungen bei einer Positionierung der Einlegeteile zu Fehlern in der Herstellung führen. Weiter ist eine automatisierte Herstellung der Kolben aufgrund der Einlegeteile nicht oder nur unter hohen Kosten möglich.

Alternative Verfahren zur Herstellung ähnlichen Kolben sind aus JP 2000213413 oder JP 03138438 bekannt.

### Darstellung der Erfindung

Es ist daher Aufgabe der vorliegenden Erfindung, ein einfaches Verfahren, durch welches ein Kolben mit Kühlkanal und einer armierten Kolbenringnut automatisiert herstellbar ist, sowie einen danach hergestellten Kolben zu schaffen.

Diese Aufgabe wird durch die Gegenstände der Ansprüche 1 und 8 gelöst.

Hierfür wird zunächst ein Kolbenrohling erstellt. In den Kolbenrohling wird eine Nut, umfassend den Kühlkanal und einen äußeren Ring, eingearbeitet. Der Kühlkanal wird anschließend mit einer entfernbaren Masse ausgefüllt. Der äußere Ring wird mit einem Verstärkungsmaterial gefüllt. Anschließend wird die entfernbare Masse aus dem Kühlkanal entfernt und der Kolben fertig bearbeitet. Dadurch erhält man einen Kolben, welcher einen Kühlkanal aufweist und mit zumindest einer verstärkten Ringnut ausgebildet ist. Alle Verfahrensschritte sind automatisiert durchführbar. Der Kolbenrohling kann zumindest im Bereich des Kühlkanals ohne Einlegeteile hergestellt werden.

Vorzugsweise wird der Kolbenrohling durch ein Gussverfahren hergestellt. Dabei ist eine einfache Gussform ohne Einlegeteile und/oder Hinterschneidungen verwendbar. Zudem können mit einer Gussform Kolben mit unterschiedlichen Kühlkanälen hergestellt werden.

Besonders bevorzugt wird die Nut in den Kolbenrohling gedreht. Da ein Kolben eine im Wesentlichen rotationssymmetrische Form aufweist, ist eine automatisierte Drehbearbeitung des Kolbenrohlings kostengünstig durchführbar.

In einer weiteren Ausführungsform wird als entfernbare Masse eine Salzmasse in den Kühlkanal eingebracht. Eine Salzmasse ist nach dem Füllen des äußeren Rings mit dem Verstärkungsmaterial kostengünstig aus dem Kühlkanal auswaschbar.

Vorzugsweise wird das Verstärkungsmaterial in den äußeren Ring eingeschweißt. Der äußere Ring wird dabei bevorzugt durch das Verstärkungsmaterial vollständig aufgefüllt. Ein Aufbringen des Verstärkungsmaterials ist in mehreren Schichten denkbar.

In einer weiteren Ausführungsform wird das Verstärkungsmaterial durch ein Laserspritzverfahren in den äußeren Ring eingespritzt. Da der Kühlkanal durch die entfernbare Masse, beispielsweise das Salz, gefüllt ist, kann das Verstärkungsmaterial durch das Laserspritzverfahren oder durch ein Schweißverfahren in den äußeren Ring eingebracht werden, ohne dass dieser durch einen Abdeckring zu schützen ist.

Besonders bevorzugt wird zumindest die erste Ringnut während einem Fertigbearbeiten des Kolbens in den äußeren Kolbenrand eingearbeitet. Daneben ist es auch denkbar, das Verstärkungsmaterial derart aufzubringen, dass gleichzeitig eine Ringnut ausgebildet wird. Durch ein vollständiges Ausfüllen des äußeren Rings und ein anschließendes Einarbeiten der Ringnut sind jedoch beide Arbeitsschritte besser automatisierbar.

Die Aufgabe wird weiter durch einen Kolben gelöst, welcher mit einem erfindungsgemäßen Verfahren hergestellt wird, wobei der Kolben aus einer Aluminiumlegierung hergestellt ist und das Verstärkungsmaterial aus Metall, Metalllegierung oder Metallkeramik besteht. Diese Werkstoffe sind zur Herstellung eines Kolbens mit den gewünschten Eigenschaften besonders geeignet.

Vorzugsweise besteht das Verstärkungsmaterial aus einer Nickel-Kupfer-Legierung oder aus Edelstahl. Insbesondere zum Einbringen des Verstärkungsmaterials durch einen Schweißvorgang sind diese Werkstoffe besonders geeignet.

In einer weiteren Ausführungsform besteht das Verstärkungsmaterial aus einer Nickellegierung. Nickellegierungen sind besonders für ein Einbringung des Verstärkungsmaterials durch ein Laserspritzverfahren geeignet.

### Kurze Beschreibung der Zeichnungen

Die Erfindung wird nachfolgend anhand bevorzugter Ausführungsformen beispielhaft beschrieben. Für gleiche Bauteile werden dabei einheitliche Bezugszeichen verwendet.

In den Zeichnungen zeigen:
- Fig. 1: eine schematische Darstellung eines Kolbenrohlings;
- Fig. 2: den Kolbenrohling gemäß Fig. 1 mit einer eingearbeiteten Nut;
- Fig. 3: den Kolbenrohling gemäß Fig. 2, wobei ein Kühlkanal mit einer entfernbaren Masse ausgefüllt ist;
- Fig. 4: den Kolbenrohling gemäß Fig. 3, wobei ein äußerer Ring mit einem Verstärkungsmaterial gefüllt ist;
- Fig. 5: den Kolbenrohling gemäß Fig. 4, wobei die entfernbare Masse aus dem Kühlkanal entfernt ist und
- Fig. 6: einen fertig bearbeiteten Kolben.

### Ausführliche Beschreibung einer bevorzugten Ausführungsform der Erfindung

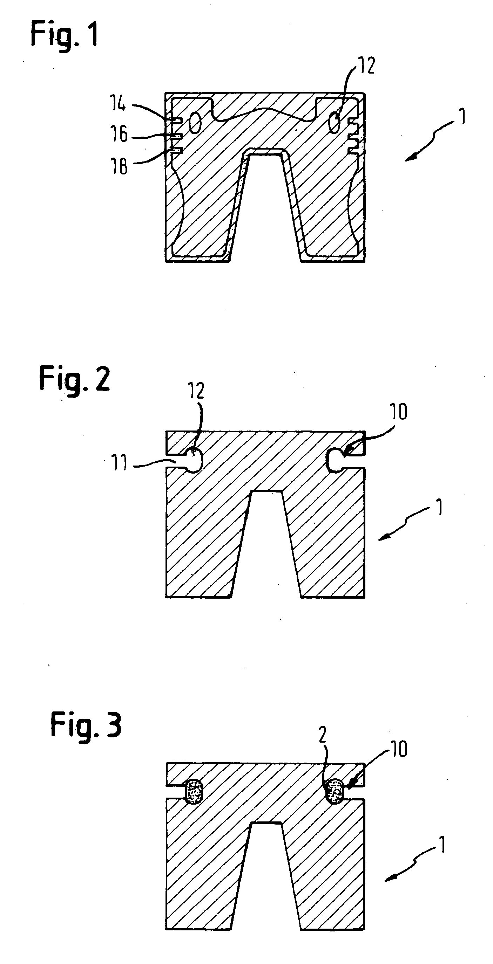

Fig. 1 zeigt schematisch einen Kolbenrohling 1. Die spätere Form des fertig bearbeiteten Kolbens ist durch eine Linie angedeutet. Der fertig bearbeitete Kolben umfasst einen Kühlkanal 12 sowie Ringnuten 14, 16, 18, wobei zumindest die erste Ringnut verstärkt ist. Der Kolbenrohling 1 ist durch ein geeignetes Gießwerkzeug herstellbar.

Fig. 2 zeigt schematisch den Kolbenrohling 1 gemäß Fig. 1, wobei in den Kolbenrohling 1 eine Nut 10 eingearbeitet ist. Die Nut 10 umfasst den Kühlkanal 12 sowie einen äußeren Ring 11. Der äußere Ring 11 kann dabei sowohl wie dargestellt mit konstanter Breite ausgebildet sein, als auch keilförmig. Die Nut 10 wird vorzugsweise in den Kolbenrohling 1 gedreht. Anschließend wird der Kühlkanal 12 mit einer entfernbaren Masse, beispielsweise einer Salzmasse, gefüllt.

Fig. 3 zeigt schematisch den Kolbenrohling 1, wobei der Kühlkanal 12 mit der entfernbaren Masse 2 ausgefüllt ist. Der äußere Ring 11 wird dabei nicht mit der entfernbaren Masse 3 gefüllt.

Die entfernbare Masse 2 wird vorzugsweise in einem leicht verformbaren Zustand in den Kühlring eingebracht. Nach einem Aushärten der entfernbaren Masse 2, wird der äußere, nicht mit der entfernbaren Masse gefüllte Ring 11 mit einem Verstärkungsmaterial gefüllt.

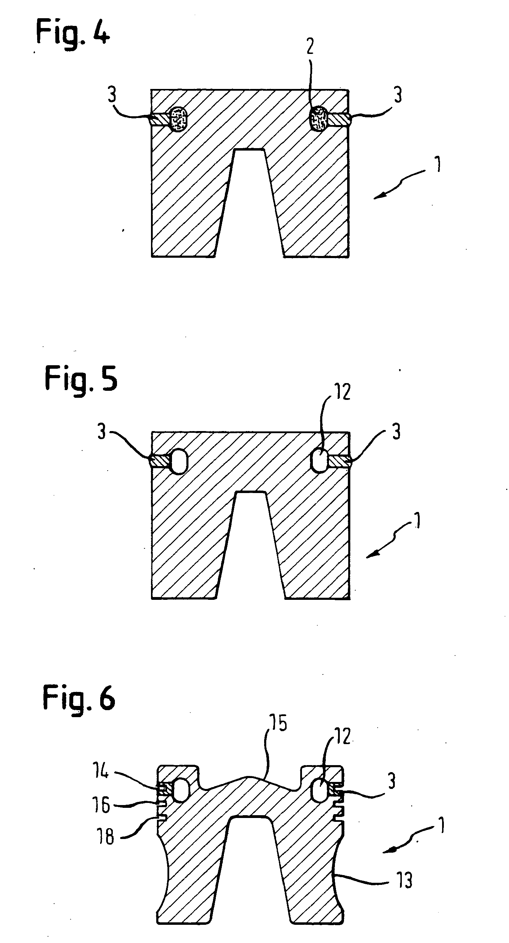

Fig. 4 zeigt schematisch den Kolbenrohling 1, wobei der Kühlkanal mit der entfernbaren Masse 2 und der äußere Ring 11 mit dem Verstärkungsmaterial 3 gefüllt ist. Das Verstärkungsmaterial 3 wird beispielsweise durch einen Schweißvorgang eingebracht. Der Kühlkanal 12 ist durch das entfernbare Material 2 vollständig geschützt, so dass kein zusätzlicher Abdeckring zur Trennung des Kühlkanals 12 von dem Verstärkungsmaterial 3 notwendig ist. Anstelle den äußeren Ring 11 wie dargestellt vollständig mir dem Verstärkungsmaterial 3 aufzufüllen ist es auch denkbar, den äußeren Ring 11 bis auf eine Ringnut 14 mit Verstärkungsmaterial 3 zu füllen. Außerdem ist es denkbar, verschieden Verstärkungsmaterialien in mehreren Schichten einzubringen.

Fig. 5 zeigt schematisch den Kolbenrohling 1, wobei das entfernbare Material 2 aus dem Kühlkanal 12 entfernt wurde. Ein Entfernen der Masse 2 ist beispielsweise durch ein Auswaschen möglich. Der Kolbenrohling 1 mit darin ausgebildetem Kühlkanal 12 und dem Verstärkungsmaterial kann anschließend fertig bearbeitet werden.

Fig. 6 zeigt schematisch einen fertig bearbeiteten Kolben mit den gewünschten Eigenschaften. Der Kolben umfasst den Kühlkanal 12 sowie Ringnuten 14, 16, 18. Die erste Ringnut 14 ist durch das Verstärkungsmaterial zusätzlich gegen eine hohe Flächenpressung sowie eine Verschleißbeanspruchung geschützt. Zudem wurden die Kolbenränder 13 geeignet bearbeitet und eine Brennraummulde 15 am Kolben ausgebildet. Daneben sind weitere Schritte zur Fertigstellung des Kolbens denkbar.

Das Verfahren zur Herstellung des Kolbens enthält ausschließlich Verfahrensschritte, die automatisiert, beispielsweise in einer Bearbeitungslinie, durchgeführt werden können. Durch ein Einarbeiten der Nut in den Kolbenrohling ist eine exaktere Ausarbeitung des Kühlkanals möglich als durch bekannte Einlegeteile.

## Patentansprüche

1. Verfahren zur Herstellung eines Kolbens für einen Verbrennungsmotor mit zumindest einem Kühlkanal (12) und zumindest einer armierten Kolbenringnut (14) mit den folgenden Schritten:
- Herstellen eines Kolbenrohlings (1),
- Einarbeiten einer Nut (10) in den Kolbenrohling (1) umfassend den Kühlkanal (12) und einen äußeren Ring (11),
- Füllen des Kühlkanals (12) mit einer entfernbaren Masse (2),
- Füllen des äußeren Rings (11) mit einem Verstärkungsmaterial (3),
- Entfernen der entfernbaren Masse (2), und
- Fertigbearbeiten des Kolbens.

2. Verfahren nach Anspruch 1, **dadurch gekennzeichnet, dass** der Kolbenrohling (1) durch ein Gussverfahren hergestellt wird.

3. Verfahren nach Anspruch 1 oder 2, **dadurch gekennzeichnet, dass** die Nut (10) durch Drehen eingearbeitet wird.

4. Verfahren nach einem der Ansprüche 1 bis 3, **dadurch gekennzeichnet, dass** eine Salzmasse als entfernbare Masse (2) in den Kühlkanal (12) eingebracht wird.

5. Verfahren nach einem der Ansprüche 1 bis 4, **dadurch gekennzeichnet, dass** in den äußeren Ring (11) das Verstärkungsmaterial (3) eingeschweißt wird.

6. Verfahren nach einem der Ansprüche 1 bis 4, **dadurch gekennzeichnet, dass** in den äußeren Ring (11) das Verstärkungsmaterial (3) durch Laserspritzverfahren eingespritzt wird.

7. Verfahren nach einem der Ansprüche 1 bis 6, **dadurch gekennzeichnet, dass** beim Fertigbearbeiten mindestens eine Ringnut (14, 16, 18) in den äußeren Kolbenrand mechanisch eingearbeitet wird.

8. Kolben hergestellt mit einem Verfahren nach einem der Ansprüche 1 bis 7, **dadurch gekennzeichnet, dass** der Kolben aus einer Aluminiumlegierung hergestellt ist und das Verstärkungsmaterial (3) aus Metall, Metalllegierung oder Metallkeramik besteht.

9. Kolben nach Anspruch 7, **dadurch gekennzeichnet, dass** das Verstärkungsmaterial aus einer Nickelkupfer-Legierung oder aus Edelstahl besteht.

10. Kolben nach Anspruch 7, **dadurch gekennzeichnet, dass** das Verstärkungsmaterial (3) aus einer Nickellegierung besteht.

## Claims

1. Method for the manufacture of a piston for an internal combustion engine having at least one cooling channel (12) and at least one reinforced piston ring groove (14) having the following steps:
- manufacturing a piston blank (1),
- forming a groove (10) in the piston blank (1) comprising the cooling channel (12) and an outer ring (11),
- filling the cooling channel (12) with a removable composition (2),
- filling the outer ring (11) with a reinforcing material (3),
- removing the removable composition (2), and
- finishing treatment of the piston.

2. Method according to claim 1, **characterised in that** the piston blank (1) is manufactured by a casting method.

3. Method according to claim 1 or 2, **characterised in that** the groove (10) is formed by turning.

4. Method according to any of claims 1 to 3, **characterised in that** a salt composition is introduced into the cooling channel (12) as the removable composition (2).

5. Method according to any of claims 1 to 4, **characterised in that** the reinforcing material (3) is welded into the outer ring (11).

6. Method according to any of claims 1 to 4, **characterised in that** the reinforcing material (3) is injected into the outer ring (11) by laser spraying.

7. Method according to any of claims 1 to 6, **characterised in that** in finishing treatment at least one ring groove (14, 16, 18) is formed mechanically in the outer piston edge.

8. Piston manufactured by a method according to any of claims 1 to 7, **characterised in that** the piston is manufactured from an aluminium alloy and the reinforcing material (3) consists of metal, metal alloy or metal-ceramic.

9. Piston according to claim 7, **characterised in that** the reinforcing material consists of a nickel-copper alloy or special steel.

10. Piston according to claim 7, **characterised in that** the reinforcing material (3) consists of a nickel alloy.

## Revendications

1. Procédé pour fabriquer un piston pour un moteur à combustion, avec au moins un canal de refroidissement (12) et au moins une gorge pour segment de piston (14) armée, comprenant les étapes ci-après :
- fabrication d'une ébauche de piston (1),
- creusement, par usinage, d'une gorge (10) dans l'ébauche de piston (1), comprenant le canal de refroidissement (12) et un anneau extérieur (11),
- remplissage du canal de refroidissement (12) avec une masse (2) pouvant être enlevée,
- remplissage de l'anneau extérieur (11) avec un matériau de renforcement (3),
- enlèvement de la masse (2) pouvant être enlevée, et
- usinage de finition du piston.

2. Procédé selon la revendication 1, **caractérisé en ce que** l'ébauche de piston (1) est fabriquée par un procédé de moulage.

3. Procédé selon la revendication 1 ou 2, **caractérisé en ce que** la gorge (10) est creusée par un usinage de tournage.

4. Procédé selon l'une des revendications 1 à 3, **caractérisé en ce qu'**une masse de sel, faisant office de masse (2) pouvant être enlevée, est introduite dans le canal de refroidissement (12).

5. Procédé selon l'une des revendications 1 à 4, **caractérisé en ce que** le matériau de renforcement (3) est inséré avec soudage dans l'anneau extérieur (11).

6. Procédé selon l'une des revendications 1 à 4, **caractérisé en ce que** le matériau de renforcement (3) est inséré par projection, par un procédé de projection au laser, dans l'anneau extérieur (11).

7. Procédé selon l'une des revendications 1 à 6, **caractérisé en ce qu'**au moins une gorge pour segment (14, 16, 18) est usinée mécaniquement dans le bord de piston extérieur lors de l'usinage de finition.

8. Piston, fabriqué avec un procédé selon l'une des revendications 1 à 7, **caractérisé en ce que** le piston est fabriqué à partir d'un alliage d'aluminium, et le matériau de renforcement (3) est composé de métal, d'alliage métallique ou de céramique métallique.

9. Piston selon la revendication 7, **caractérisé en ce que** le matériau de renforcement est composé d'un alliage nickel-cuivre ou d'acier spécial.

10. Piston selon la revendication 7, **caractérisé en ce que** le matériau de renforcement (3) est composé d'un alliage de nickel.
